## Europäisches Patentamt

## European Patent Office

## Office européen des brevets

(11) Veröffentlichungsnummer: **0 061 022**
A2

# (12) EUROPÄISCHE PATENTANMELDUNG

(21) Anmeldenummer: 82101548.4

(22) Anmeldetag: 28.02.82

(51) Int. Cl.³: **B 23 B 47/28**

(30) Priorität: 05.03.81 DE 3108290

(43) Veröffentlichungstag der Anmeldung:
29.09.82 Patentblatt 82/39

(84) Benannte Vertragsstaaten:
AT BE CH FR GB IT LI NL SE

(71) Anmelder: Roth, Günter
Spessartstrasse 11
D-8752 Sailauf(DE)

(72) Erfinder: Roth, Günter
Spessartstrasse 11
D-8752 Sailauf(DE)

(54) Bohrlehre zum Führen eines Werkzeuges/Bohrers.

(57) Eine derartige Bohrlehre (10) dient zur Herstellung von Dübellöchern sowie Topfbohrungen und Schraubenlöchern für den Anschlag von Scharnieren und der dazugehörenden Montageplatte in eine Werkstückplatte (39).

Um zu erreichen, daß in einfachster Art und Weise maßgerecht sowohl Dübellöcher für Fachbodenträger, Montageplatte und Flügelplatten in Seitenteile, ferner Bohrungen für die Topfscharniere und deren Befestigung in den Türen hergestellt werden können, sind in der Bohrlehre (10) in einer ersten Reihe (11) in gleichem Abstand (12) voneinander Bohrbuchsen (13) für die Dübellöcher und einer zweiten Reihe (16) in gleichem Abstand (17) voneinander Bohrungen (18) zum Fixieren/Zentrieren des Topfbuchsenwerkzeuges (47) vorgesehen, und ferner sind in der Lehre (10) veränderbare Arretierungsstifte (34-38) für Rechts- oder Linksanschlag sowie zum Einstellen eines veränderbaren Abstandes (42-45) der Dübellöcher/Topfbohrungen/Schraubenlöcher von der Seiten- (40) und/oder Bodenunterkante (41) der Werkstückplatte (39) angeordnet.

FIG. 1

Bohrlehre zum Führen eines Werkzeuges/Bohrers

Die vorliegende Erfindung betrifft eine Bohrlehre zum Führen
eines Werkzeuges/Bohrers zur Herstellung von Dübellöchern
sowie Topfbohrungen und Schraubenlöchern für den Anschlag von
Scharnieren und der dazugehörigen Montageplatte in eine Werkstückplatte.

Bei der Fertigung von Möbelteilen, wie Seitenteilen, Böden,
Türen, die später zu einem Korpus zusammengesetzt werden, ist
es erforderlich, in diese Möbelteile verschiedene Bohrungen
zum Halten und Befestigen der Möbelbeschläge vorzusehen.
Dabei umfassen diese Bohrungen Dübellöcher für Fachbodenträger
sowie Topfbohrungen zum Halten einer Topfscharniere, die beispielsweise in der DE-PS 1459077 beschrieben ist. Auch Schraubenlöcher für die Befestigung von Montage-/Kreuzmontageplatten
für die Topfscharniere müssen in den einzelnen Teilen vorgesehen werden. Bei der Großserienfertigung von Möbelteilen
werden diese Bohrungen auf entsprechend großen Maschinen (Bohrwerke) hergestellt. Bei der Anfertigung von Kleinserien sowie
der Einzelanfertigung werden bisher diese Bohrungen so hergestellt, daß zunächst ein Anreißen/Markieren der Bohrungen
auf dem entsprechenden Plattenteil erfolgt und dann die Bohrungen
von Hand vorgenommen werden. Hierbei ist es bekannt, daß beispielsweise die Maße von Topfbohrungen in einem Seitenteil mit
einer Vorrichtung abgegriffen und auf eine Tür übertragen werden. um zu gewährleisten, daß an der entsprechenden Stelle an
der Tür die Montageplatte für die Topfscharniere befestigt werden kann. Diese Arbeitsweise ist jedoch insbesondere im Hinblick
auf den erforderlichen Zeitaufwand nicht günstig.

Aufgabe der vorliegenden Erfindung ist es deshalb, eine Bohrlehre der eingangs genannten Art zu schaffen, mit der in einfachster
Art und Weise maßgerecht sowohl Dübellöcher für Fachbodenträger, Montageplatten und Flügelplatten in Seitenteile, ferner Bohrungen für
die Topfscharniere und deren Befestigung in den Türen hergestellt
werden können.

- 2 -

Zur Lösung dieser Aufgabe wird gemäß der vorliegenden Erfindung vorgeschlagen, daß in der Bohrlehre in einer ersten Reihe in gleichem Abstand voneinander Bohrbuchsen für die Dübellöcher und in einer zweiten Reihe in gleichem Abstand voneinander Bohrungen zum Fixieren/Zentrieren des Topfbohrungswerkzeuges vorgesehen sind, und daß ferner in der Lehre veränderbare Arretierungsstifte für Links- oder rechtsanschlag sowie zum Einstellen eines veränderbaren Abstandes der Dübellöcher/Topfbohrungen/Schraubenlöcher von der Seite - und/oder Bodenvorderkante der Werkstückplatte angeordnet sind.

Mit der erfindungsgemäßen Bohrlehre wird es in einfachster Art und Weise möglich, die Dübellöcher für die Fachbodenträger herzustellen. Ferner wird es mit der gleichen Lehre in einfachster Art und Weise möglich, alle vorkommenden Bohrungen für eine einfache Montage von Scharnieren herzustellen. Hierbei wird die Lehre zum Bohren der Dübellöcher auf das Seitenteil gelegt und mit den Arretierungsstiften gegenüber der Seitenkante so positioniert, daß die Bohrbuchsen in einem vorgewählten Abstand von der Seitenvorderkante der zu bohrenden Werkstückplatte angeordnet sind. Mit einer Handbohrmaschine werden dann die Dübellöcher in die Werkstückplatte, die vorzugsweise aus Holz ist, gebohrt.

Mit der gleichen Bohrlehre werden in die Türen auch die Topfbohrungen für die Topfscharniere gebohrt. Hierbei wird ebenfalls die Lehre auf die Türen aufgelegt und die vorher in der Lehre entsprechend einem gewünschten Abstand der Topfbohrungen von der Seitenvorderkante eingesteckten Arretierungs/Positionierstifte gegen die Seitenvorderkante der Werkstückplatte gedrückt. Mit einer Oberfräse oder einer Bohrmaschine mit Anlaufring, welcher in die Bohrung der Lehre eingreift, wird dann die Topfbohrung hergestellt. Auf der Lehre wird dann z.B.

- 3 -

mit einem Bleistiftstrich die zum Zentrieren verwendete
Bohrung markiert. Bei gleichbleibender Position der
Arretierungs/Positionierstifte wird die Lehre dann in
Verbindung mit einer Hilfsbohrlehre zum Bohren der Schraubenlöcher für die Befestigung der Montageplatte an der Seite verwendet. Hierzu wird die Lehre, wie bei der Tür
auf die Seite gelegt und so gegen die Vorderkante und die Bodenvorderkante gedrückt, daß die Positionierstifte an diesen Kanten anliegen. In zwei Dübellöchern
zwischen denen sich die auf der Lehre markierten Bohrung
befindet, wird nun eine Hilfsbohrlehre eingesteckt. In der
Hilfsbohrlehre sind Bohrbuchsen für die Herstellung der
Schraubenlöcher für den Anschlag der Montageplatte an der Seite angeordnet. Mit einer Handbohrmaschine werden dann die
entsprechenden Schraubenlöcher in die Seite gebohrt.

Die Hilfsbohrlehre wird in Verbindung mit der Bohrlehre auch
dazu benutzt, die entsprechenden Befestigungsschraubenlöcher
für das Befestigen der Topfscharniere in der Tür herzustellen.

Mit der erfindungsgmäßen Bohrlehre wird somit in einfachster
Art und Weise ein maßgerechtes Bohren von Dübellöchern für
Fachbodenträger sowie von Topfbohrungen und Schraubenlöchern
für die Befestigung von Topfscharnieren und deren Montageplatte erreichbar.

Weitere vorteilhafte Merkmale der Erfindung ergeben sich aus
den Unteransprüchen sowie der nachfolgenden Beschreibung.
In den Zeichnungen veranschaulicht:

- 4 -

Fig. 1 Eine Bohrlehre in Draufsicht.

Fig. 2 Einen Schnitt längs der Linie A-A in Fig. 1.

Fig. 3 Eine Bohrlehre nach Fig. 1 aufgelegt auf einem Seitenteil.

Fig. 4+ Bohrvorrichtungen zum Bohren der Topf-
5 bohrungen.

Fig. 6 Ein weiteres Ausführungsbeispiel einer Bohrlehre.

Fig. 7 Bohrerführung für Zentrierbohrung für Topfbohrung.

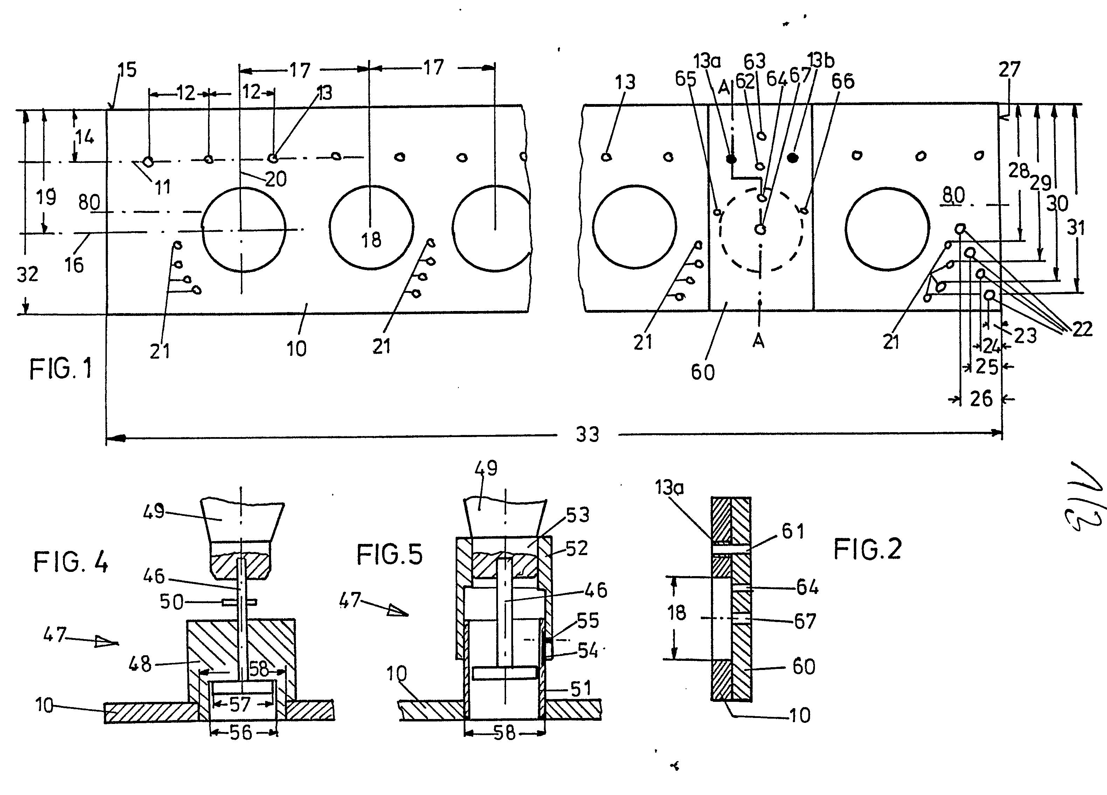

In Fig. 1 ist die Bohrlehre zum Führen eines Bohrers zur Herstellung von Bohrungen in Möbelteilen mit 10 bezeichnet. In der Lehre 10 sind in einer ersten Reihe 11 in gleichem Abstand 12 voneinander Bohrbuchsen 13 vorgesehen. Bevorzugt ist dabei die Reihe 11 in einem Abstand 14 in der Größenordnung von 25 mm von der Bohrlehrenlängskante 15 angeordnet. Der Abstand 12 zwischen den Bohrungen 13 beträgt 32 mm. Die Bohrbuchsen 13 sind so ausgelegt, daß ein Bohrer von 5 mm geführt wird. In einer zweiten Reihe 16 sind ebenfalls im gleichen Abstand 17 voneinander angeordnete Bohrungen 18 vorgesehen. Diese Bohrungen 18 weisen einen Durchmesser von 40 mm auf und sind in einem Abstand 19 in der Größenordnung von 60 mm von der Seitenkante 15 angeordnet. Der Abstand 17 beträgt 64 mm. Wie aus der Zeichnung ersichtlich, sind die Bohrungen 18 symetrisch zu den Bohrbuchsen 13 angeordnet und zwar derart, daß die Mittelachse 20 genau in der Mitte zwischen zwei Bohrbuchsen 13 liegt. Wie ferner aus Fig. 1 zu ersehen ist, weist die Lehre 10 Bohrungen 21 auf, in die ein Arretierungsstift einsteckbar sind. Über die Bohrungen 21 kann in Verbindung mit den Arretierungsstiften der Abstand der Bohrbuchse 13 sowie der Bohrungen 18 von der Seitenvorderkante einer Werkstückplatte verändert werden. In der Lehre 10 sind darüberhinaus Bohrungen 22 vorgesehen. In diese können ebenfalls ein Arretierungsstift eingesteckt werden, um so den Abstand der Bohrungen 13 und 18 von der Bodenunter-kante einer Werkstückplatte zu verändern. Dabei

- 5 -

weisen die einzelnen Bohrungen 22 verschiedene Abstände
23, 24, 25, 26 von der Lehrenkante 27 auf, wobei der Abstand 23 5 mm, der Abstand 24 10 mm, der Abstand 25
15 mm und der Abstand 26 20 mm beträgt. In gleicher
Weise sind die Bohrungen 21 in verschiedenen Abständen
28, 29, 30, 31 von der Seitenkante 15 angeordnet. Die Abstände sind dabei jeweils wie folgt: Abstand 28 = 62 mm,
Abstand 29 = 81,5mm, Abstand 30 = 82,5 mm, Abstand 31 = 83,5 mm.
Die Lehre selbst weist eine Stärke von ca. 10 mm auf, eine
Breite 32 von 100 mm und eine Länge 33 zwischen ca. 50 cm
und 2,50 m. Die Bohrlehre 10 ist bevorzugt aus einem Kunststoff gefertigt. Es ist selbstverständlich aber auch möglich, die Lehre aus einem Leichtmetallwerkstoff herzustellen.
Die Bohrbuchsen 13 sind aus gehärtetem Stahl.

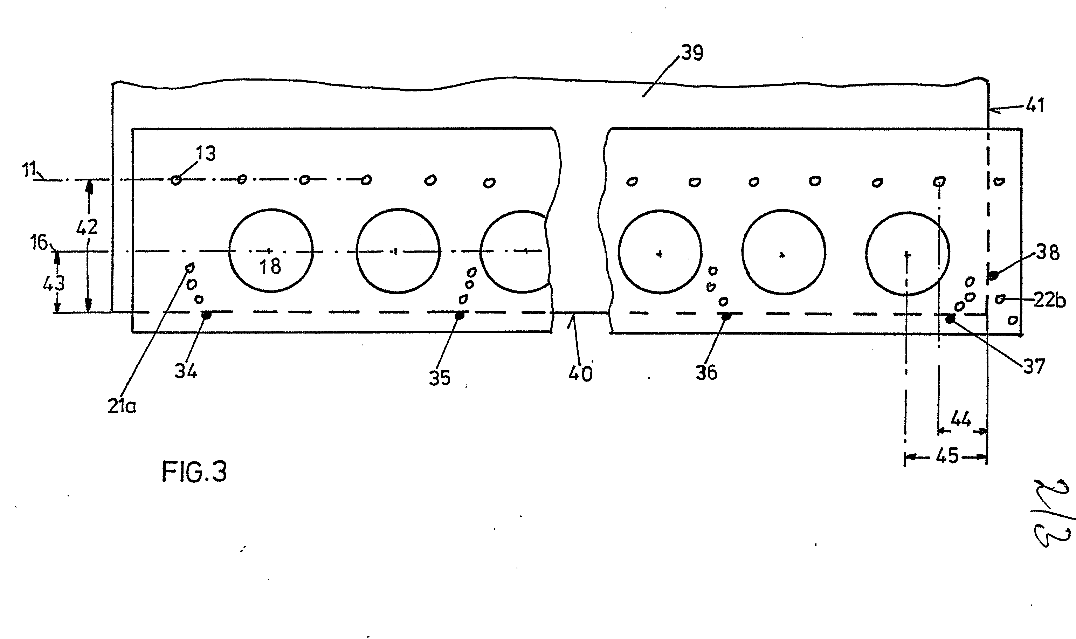

Die Arretierungsbohrungen 21 und 22 sind ebenfalls mit
Bohrbuchsen versehen, in die die Arretierungsstifte leicht
auswechselbar einsteckbar sind. In Fig. 3 sind die Arretierungsstifte 34, 35, 36 und 37 in Bohrungen 21 eingesteckt.
Ferner ist ein Arretierungsstift 38 in eine der Bohrungen
22 eingesteckt. Die Lehre 10 ist auf ein zu bohrendes Seitenteil 39 gelegt und zwar derart, daß die Stifte 34 bis 37
an der Seitenvorderkante 40 des Seitenteils 39 anliegen
und der Arretierungsstift 38 an der Seitenunterkante 41
anliegt. Wie ersichtlich, kann durch einfaches Umstecken der Arretierungsstifte 34 bis 37, beispielsweise in die Bohrung 21 A der Abstand 42 der Dübellöcher von der Kante 40 verändert werden. Entsprechend
kann durch Umstecken der Stifte 34 bis 37 der Abstand 43
der Bohrungen 18 von der Kante 40 verändert werden. Auch
der Abstand 44 bzw. 45 der Bohrungen 13 bzw. 18 von der
Seitenunterkante 41 kann dadurch verändert werden, daß
der Arretierungsstift 38 beispielsweise in die Bohrung 22
B gesteckt wird. Eine Rechts- bzw.Linksanschlag der
Möbelbeschläge wird in einfachster Art und Weise mit der

- 6 -

vorgestellten Bohrlehre dadurch möglich, daß die Bohrlehre um 180 ° gedreht und die Arretierungsstifte so eingesetzt werden, daß sie beispielsweise ausgehend von einem
Rechtsanschlag, bei dem sie auf der einen Seite der Bohrlehre herausgeragt haben, nunmehr bei einem Linksanschlag
der Lehre auf der anderen Seite der Lehre herausragen.
Wie bereits ausgeführt, können mit der Lehre 10 die Dübellöcher für Fachbodenträger hergestellt werden und zwar dadurch, daß die Lehre beispielsweise entsprechend der in
Fig. 3 dargestellten Position auf das Seitenteil 39 aufgelegt wird und mit einer Handbohrmaschine in die ein 5 mm-
Bohrer eingespannt ist, die Dübellöcher gebohrt, wobei dabei der Bohrer in den Bohrbuchsen 13 geführt wird. Die
Herstellung der Topfbohrung erfolgt ebenfalls bei aufgelegter Bohrlehre 10 auf einer Tür.          Hierbei ist es
einerseits möglich, in die Bohrung 18 zum Fixieren eines
Topfbohrers einen Anlaufring einer Oberfräse bzw. einer
Bohrmaschine einzusetzen und die Topfbohrung herzustellen. Dabei weist der Anlaufring ebenfalls einen
Durchmesser von 40 mm auf, während der Topfbohrer einen
Außendurchmesser von 35 mm aufweist, so daß in die Tür
Topfbohrungen mit einem Durchmesser von 35 mm gebohrt/gefräst werden.

Gemäß einem weiteren Vorschlag der Erfindung wird hierzu
vorgeschlagen, daß in die Bohrung 18 zum Fixieren eines
Topfbohrers 46 eine Bohrvorrichtung 47 einsetzbar ist.

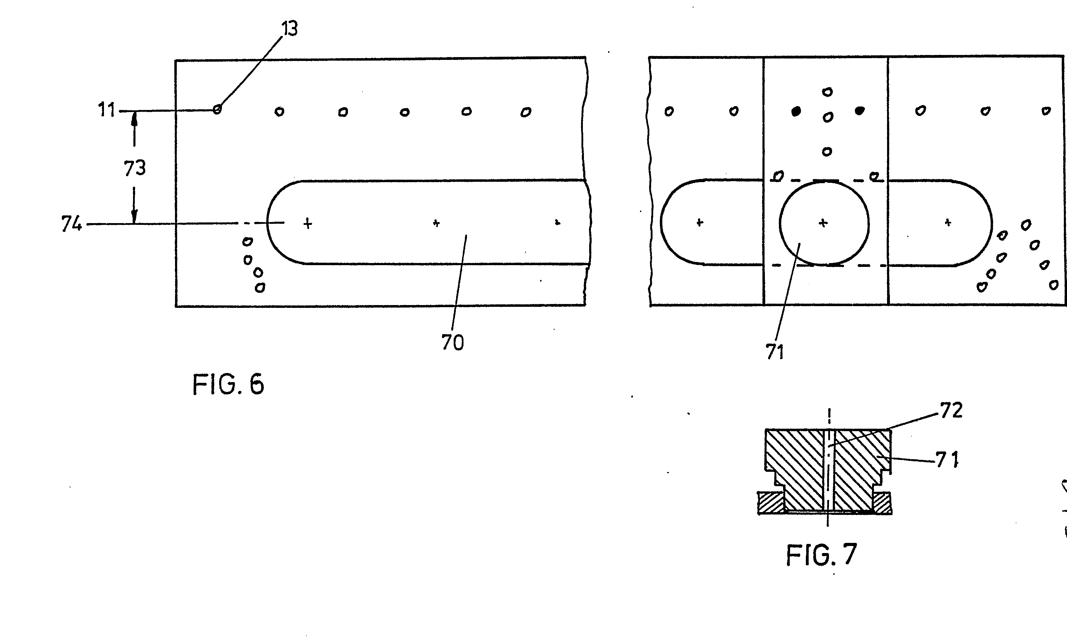

In Fig. 4 und 5 der Zeichnungen sind zwei verschiedene
Bohrvorrichtungen nach der Erfindung veranschaulicht.
Gemäß Fig. 4 ist der Topfbohrer 46 in einer in die Bohrung
18 der Lehre 10 einsteckbaren Zentrierung 48 geführt und
in einer Handbohrmaschine 49 eingespannt. Ein verstellbarer Ring 50 dient zur Bohrtiefeneinstellung.

Gemäß dem Ausführungsbeispiel nach Fig. 5 ist in die
Bohrung 18 der Lehre 10 eine Hülse 51 gesteckt, die eben-

* um die Längsachse 80

- 7 -

falls zur Zentrierung und Führung des Topfbohrers 46
dient. Die Hülse 51 ist zweiteilig ausgebildet und weist
ein Hülsenoberteil 52 auf, das auf den Konus 53 einer
Handbohrmaschine 49 aufschiebbar ist. Das Hülsenteil 51
und das Hülsenteil 52 sind als Schiebehülse ausgebildet,
wobei über eine nicht näher dargestellte Nut 54 und eine
Schraube 55 die Bohrtiefe einstellbar ist. Bei beiden Ausführungsbeispielen nach den Fig. 4 und 5 ist der Durchmesser der Bohrung 18 40 mm und entsprechend der Außendurchmesser 58 der Zentrierung 48/Hülse 51 ausgebildet.
Der Innendurchmesser 56 beträgt 37 mm und der Topfbohrerdurchmesser 57 35 mm.

- 8 -

Darüberhinaus wird die erfindungsgemäße Bohrlehre 10 vorteilhaft dazu eingesetzt, entsprechend vorgesehenen Topfbohrungen in einer Tür die dazugehörigen Montage/ Kreuzmontageplatten an einer Seite vorzusehen. Hierzu wird die Lehre 10 bei gleichbleibender Position der Arretierungsstifte 34 bis 37 und 38 auf die Seite gelegt und ferner eine Hilfsbohrlehre 60 in zwei nebeneinander liegende Dübellöcher-Bohrbuchsen, s. beispielsweise in Fig.1 und 2 13 a, 13 b eingesteckt. Die entsprechenden Steckstifte sind mit 61 in Fig. 2 bezeichnet. In der Hilfsbohrlehre 60 sind Bohrbuchsen 62, 63 und 64 zum Vorbohren der Schraubenlöcher für einfache Montageplatten. Die ferner vorgesehenen Bohrbuchsen 65 und 66 dienen zum Vorbohren der Löcher zum Befestigen der Topfscharniere.

Die Bohrbuchse 67 ist vorgesehen, damit eine Zentrierbohrung für eine Topfbohrung vorgenommen werden kann. Dabei werden die einzelnen Bohrungen für die Schraubenlöcher in Seite und Türe so hergestellt, daß die Bohrungen mit einer Handbohrmaschine und einem Bohrer von vorzugsweise 3 mm ausgeführt wird, wobei dann der Bohrer in der jeweiligen Bohrbuchse 62 bis 66 geführt wird. Der Einfachheit halber wird dabei bei aufgesteckter Hilfsbohrlehre 60 die Bohrlehre 10 mit durchgebohrt. Durch den Einsatz von mehreren Hilfsbohrlehren 60 und deren Einstecken in einen Bereich einer anderen Topfbohrung 18 können dann dort die entsprechenden Vorbohrungen für die Befestigung der entsprechenden zweiten oder dritten Montageplatte* erfolgen. Es ist selbstverständlich ebenfalls vorteilhaft möglich, durch Änderung des Positionierstiftes 38 in eine andere Bohrung 22 das Auflagemaß der Tür auf dem Boden des Möbelkorpus zu verändern. Die Hilfsbohrlehre 60 ist bevorzugt aus einem nicht-rostendem Stahl gefertigt in dem entsprechend gehärtete Bohrbuchsen eingesetzt sind.

* /Topfscharniere

- 9 -

In Fig. 6 ist ein weiteres Ausführungsbeispiel einer Bohrlehre nach der Erfindung veranschaulicht. Diese Bohrlehre unterscheidet sich von der gemäß Fig. 1 dadurch, daß anstelle der einzelnen Bohrungen 18 eine durchgehende oder mehrere hintereinander angeordnete ovale Öffnungen 70 vorgesehen sind.

Eine derartige Ausbildung hat den Vorteil, daß mit einer entsprechenden Zusatzzentrierung 71, wie sie beispielsweise in Fig. 7 dargestellt ist, an jeder beliebigen Stelle auf der Tür eine Zentrierbohrung zum Bohren einer Topfbohrung angebracht werden kann. Dabei wird die in Fig. 7 veranschaulichte kreisförmige Zentrierung an der gewünschten Stelle in den Schlitz 70 gedrückt und mittels einer Handbohrmaschine, deren Bohrer in der Bohrung 72 der Zentrierung geführt ist, die Zentrierbohrung für die Topfbohrung vorgenommen.

Der übrige Aufbau der Lehre entspricht im wesentlichen dem der Lehre 10. Lediglich die Breite der Lehre wurde von 100 auf 120 mm vergrößert und der Abstand (73) der Bohrungsreihe (11) von der Mitte (74) der Schlitzöffnung. Die in Fig. 7 dargestellte Zusatzzentrierung 71 kann selbstverständlich auch in die Öffnung 18 der Lehre 10 gesteckt werden. Darüberhinaus können mit einer in die Lehre gesteckten Zusatzzentrierung 71 die Maße neu, von bereits gebohrten Topfbohrungen auf ein Seitenteil übertragen werden.

Ansprüche

1. Bohrlehre zum Führen eines Werkzeuges/Bohrers zur
   Herstellung von Dübellöchern sowie Topfbohrungen und
   Schraubenlöchern für den Anschlag von Topfscharnieren
   und der dazugehörigen Montageplatte in eine Werkstückplatte, dadurch gekennzeichnet, daß in der Lehre (10)
   in einer ersten Reihe (11) in gleichem Abstand(12)
   voneinander Bohrbuchsen (13) für die Dübellöcher und
   in einer zweiten Reihe (16) in gleichem Abstand (17)
   voneinander Bohrungen (18) zum Fixieren/Zentrieren
   des Topfbuchsenwerkzeuges (47) vorgesehen sind, und
   daß ferner in der Lehre (10) veränderbare Arretierungsstifte (34-38) für Rechts- oder Linksanschlag sowie zum
   Einstellen eines veränderbaren Abstandes (42-45) der
   Dübellöcher/Topfbohrungen/Schraubenlöcher von der Seiten-
   (40) und/oder Bodenunterkante (41) der Werkstückplatte
   (39) angeordnet sind.

2. Bohrlehre nach Anspruch 1,
   dadurch gekennzeichnet, daß die Arretierungsstifte
   (34-38) in Bohrbuchsen gehalten sind.

3. Bohrlehre nach Anspruch 1,
   dadurch gekennzeichnet, daß in zwei nebeneinander
   liegenden Dübellöcher-Bohrbuchsen (13a, 13 b) eine Hilfsbohrlehre (60) einsteckbar ist, in der Bohrbuchsen (62-67)
   für die Herstellung der Schraubenlöcher für den Anschlag
   der Topfscharniere bzw. der dazugehörigen Montageplatte
   angeordnet sind.

4. Bohrlehre nach einem der Ansprüche 1 bis 3,
   dadurch gekennzeichnet, daß in die Bohrungen (18) zum
   Fixieren des Topfbohrers ein Anlaufring einer Oberfräse
   bzw. einer Bohrmaschine einsetzbar ist.

- 2 -

5. Bohrlehre nach einem der Ansprüche 1 bis 3,
dadurch gekennzeichnet, daß in die Bohrungen (18)
zum Fixieren des Topfbohrers (46) eine Bohrvorrichtung
(47) einsetzbar ist.

6. Bohrvorrichtung, insbesondere zum Bohren einer
Topfbohrung mit einer Bohrlehre nach den Ansprüchen 1 bis 3,
dadurch gekennzeichnet, daß der Topfbohrer (46) in
einer in die Bohrung (18) der Lehre (10) einsetzbaren
Zentrierung (48) bzw. Hülse (51, 52) geführt und in
einer Handbohrmaschine (49) eingespannt ist.

7. Bohrvorrichtung nach Anspruch 6,
dadurch gekennzeichnet, daß die Hülse (51, 52) als
zweiteilige Schiebehülse ausgebildet ist, deren einer
Hülsenteil (51) in der Bohrung (18) der Lehre (10)
einsetzbar ist und deren anderer Hülsenteil (52) auf
den Konus (53) einer Handbohrmaschine (49) aufschiebbar ist.

FIG. 1

FIG. 2

FIG. 4

FIG.5

0061022

FIG.3

0061022

FIG. 6

FIG. 7

3/3